# EUROPÄISCHE PATENTSCHRIFT

(11) **EP 1 925 486 B1**
(45) Veröffentlichungstag und Bekanntmachung des Hinweises auf die Patenterteilung: **27.07.2011**
(21) Anmeldenummer: 07019256.2
(22) Anmeldetag: 01.10.2007
(51) Int. Cl.: B60K 6/48, B60K 6/10

(54) **Hybridantriebssystem für ein Fahrzeug**
Hybrid propulsion system for a vehicle
Système d'entraînement hybride pour un véhicule

(30) Priorität: 24.11.2006 DE 102006055541
(43) Veröffentlichungstag der Anmeldung: 28.05.2008
(73) Patentinhaber: Volkswagen Aktiengesellschaft, 38436 Wolfsburg (DE)
(72) Erfinder: Kube, Roland, 38179 Schwülper (DE); Kolze, Fabian, 39179 barleben (DE)

(56) Entgegenhaltungen:
- EP-A- 0 612 915
- WO-A-03/031215
- DE-A1- 3 126 487
- DE-A1- 3 607 701
- DE-C1- 19 704 786

## Beschreibung

Die Erfindung betrifft ein Hybridantriebssystem für ein Fahrzeug gemäß dem Oberbegriff des Patentanspruchs 1.

Ein gattungsgemäßes Hybridantriebssystem für ein Fahrzeug ist beispielsweise bekannt geworden aus der DE 103 53 256 B3. In dieser werden Lösungsvorschläge angegeben, mit denen das Anlassen des Verbrennungsmotors bei gleichzeitig das Fahrzeug antreibende Elektromaschine weitgehend ruckfrei erfolgen kann. Im Einzelnen werden Maßnahmen vorgeschlagen, die entweder den Betrieb der Elektromaschine modifizieren, in die Arbeitsweise der zwischen einer Elektromaschine und einer Antriebswelle angeordneten Kupplung eingreifen oder aber die Übersetzung eines Fahrzeuggetriebes temporär verändern.

Die DE 31 26 487 A1 beschreibt eine Hybridantriebsanordnung für ein Kraftfahrzeug, bestehend aus einer Brennkraftmaschine, einem aus einer Motorschwungmasse und einer Speicherschwungmasse bestehenden Schwungmassensystem sowie einem Hauptgetriebe. Das Schwungmassensystem ist über Kupplungen mit der Brennkraftmaschine und dem Getriebe verbindbar. Kern dieser Erfindung ist es, mit der im Brems- und Schubbetrieb des Kraftfahrzeuges nicht benötigten Bewegungsenergie das Speicherschwungrad in Rotation zu versetzen, um diese Energie zu einem Wiederstart der stehenden Brennkraftmaschine nutzen zu können. Das Speicherschwungrad ist über eine direkt zugeordnete Kupplung mit dem Antrieb verbindbar und wird nur für den Fall der Energieaufnahme im Brems- und Schubbetrieb oder den des Motorstarts in den Antriebsstrang eingekuppelt.

Aus der WO 03/031215 A1, die ein hybridantriebystem gemäβ dem oberbegriff des Anspruchs 1 offenbart, ist eine Übertragungseinheit mit zwei Kupplungen und einer elektrischen Maschine, insbesondere für ein Kraftfahrzeug, bekannt. Das Dokument zeigt vom Aufbau her einen Hybridantriebsstrang, bestehend aus einer Brennkraftmaschine einer Elektromaschine, einem Kupplungssystem mit zwei Kupplungen sowie einem Getriebe. Das Kupplungssystem besitzt eine erste Kupplung zum reibschlüssigen Verbinden der Kurbelwelle mit einer Elektromaschine. Durch diese Verbindung ist es möglich, die Brennkraftmaschine mit Hilfe der Elektromaschine zu starten. Diese motorseitig angeordnete Kupplung des Kupplungssystems, ist über eine gemeinsame Druckplatte mit der getriebeseitig angeordneten Kupplung reibschlüssig verbindbar. Die getriebeseitige Kupplung zeigt den klassischen Aufbau einer Reibkupplung, mit radial außenliegenden Reibelementen und einem innenliegenden Torsionsdämpfungselement, zur reibschlüssigen Verbindung der Getriebeeingangswelle mit der gemeinsamen Druckplatte

Der Erfindung liegt die Aufgabe zugrunde, gattungsgemäße Hybridantriebssysteme so weiterzubilden, das die Elektromaschine nicht den ungedämpften Drehungleichförmigkeiten der Verbrennungskraftmaschine ausgesetzt ist und bei dem das Starten der Verbrennungskraftmaschine energetisch optimal erfolgt.

Diese Aufgabe wird gelöst mit einem Hybridantriebssystem gemäß den Merkmalen des Patentanspruchs 1. Die Unteransprüche betreffen besonders zweckmäßige Weiterbildungen der Erfindung.

Das erfindungsgemäße Hybridantriebssystem ist also so ausgelegt, dass für das Umschalten von Elektromaschinenantrieb auf Verbrennungsmotorantrieb zum Start des Verbrennungsmotors eine zur Dämpfung von Drehungleichförmigkeiten vorgesehenen Dämpfungseinrichtung vom Verbrennungsmotor entkoppelbar ist. Eine solche Dämpfungseinrichtung ist bevorzugt ein so genanntes Zweimassenschwungrad, das bei dem erfindungsgemäßen Hybridantriebsystems während des durch die Elektromaschine bewirkten Anlassens des Verbrennungsmotors entkoppelt ist.
Damit muss die Elektromaschine gegen einen deutlich reduzierten Umfang an trägen Drehmassen arbeiten und kann so den Verbrennungsmotor in kürzester Zeit hochreißen und zu einem stabilen Verbrennungsbetrieb führen. Diese Anordnung der Komponenten des Hybrisantriebsstranges führt dazu, dass bei der Umschaltung von Elektromaschinenantrieb auf Verbrennungsmotorantrieb die Startzeit für den Verbrennungsmotor möglichst klein gehalten werden kann und eine nahezu ruckfreie Fahrzeugbeschleunigung möglich ist.

Um zu einer möglichst kompakten Bauweise gelangen zu können, ist eine zwischen dem Verbrennungsmotor und der Elektromaschine angeordnete erste Kupplung nach Art einer Formschlusskupplung ausgebildet, bei der beispielsweise Verzahnungen zur Drehmomentübertragung miteinander verbindbar sind. Bevorzugt ist als Formschlusskupplung ein Schiebemuffensystem vorgesehen, wie es dem Grunde nach beispielsweise bei Stufenwechselgetrieben für die Schaltung einzelner Getriebegänge bekannt ist. Gemäß einer vorteilhaften Weiterbildung der Erfindung ist der Formschlusskupplung auch eine Synchronisationseinrichtung zugeordnet, mit der die Drehzahl der Elektromaschine und des Verbrennungsmotors angleichbar sind, bevor der eigentliche Formschluss hergestellt wird. Auch durch diese Maßnahme wird sichergestellt, dass der Fahrer eines mit dem erfindungsgemäßen Hybridantriebssystem ausgerüsteten Fahrzeuges praktisch keinen Ruck verspürt, wenn vom elektromotorischen Antrieb auf verbrennungsmotorischen Antrieb umgeschaltet wird. Als Synchronisationseinrichtung können die aus dem Getriebebau hinlänglich bekannten Reibring-Konusring-Anordnungen übernommen werden. Alternativ ist jedoch auch der Einsatz einer Lamellenkupplung vorstellbar, weil auch mit dieser auf Basis bewährter Komponenten eine feinfühlige Drehzahlgleichung vorgenommen werden kann.

Im Hinblick auf einen möglichst einfachen Aufbau ist das Schiebemuffensystem zweiteilig aufgebaut. Eine erste Schiebemuffe kann mittels eines Aktuators mit einem dem Verbrennungsmotor zugeordneten Bauteil, beispielsweise einem Kurbelwellenflansch, in Eingriff gebracht werden. Die zweite Schiebemuffe ist mit der ersten Schiebemuffe wirkverbunden und ist mit einem Rotorabschnitt der Elektromaschine verbunden. Ein solch zweiteiliges Schiebemuffensystem lässt sich kostengünstig fertigen.

Um möglichst schnelle Umschaltzeiten realisieren zu können, ist die erste Schiebemuffe bei elektromotorischen Antrieb permanent mit einer Kupplungsglocke der Lamellenkupplung in Eingriff, so dass bereits eine geringfügige Verlagerung der Schiebemuffe ausreichend ist, um das Lamellenpaket dann ohne große Leerwege zur Drehmomentenübertragung zusammenzudrücken.

Zur Beseitigung der Drehungleichförmigkeiten des Verbrennungsmotors ist gemäß einer Weiterbildung der Erfindung das Schiebemuffensystem so ausgelegt, dass sowohl eine Primärmasse als auch eine Sekundärmasse des Zweimassenschwungrades an ein dem Verbrennungsmotor primär zugeordnetes Bauteil ankoppelbar sind. Dabei wird auch eine Kopplung zwischen dem Rotorabschnitt der Elektromaschine und der Sekundärmasse hergestellt.

Eine kompakte Bauweise für bestimmte Komponenten des erfindungsgemäßen Hybridantriebssystemswird beispielsweise dann erreicht, wenn die Sekundärmasse des Zweimassenschwungrades oder auch ein Aktuator zur Beaufschlagung des Schiebemuffensystems zumindest teilweise innerhalb des Rotors der Elektromaschine angeordnet sind. Durch diese Verschachtelung werden im Inneren des Rotors befindliche Toträume optimal genutzt.

Andere vorteilhafte Ausführungsbeispiele der Erfindung sind in den Zeichnungen dargestellt. Dabei zeigen
- Fig. 1:: Komponenten eines Hybridantriebssystems, das sowohl eine Elektromaschine als auch einen Verbrennungsmotor als Antrieb aufweist,
- Fig. 2:: in einer Schnittansicht ein Ausführungsbeispiel für eine Kupplung, die zwischen den Verbrennungsmotor und der Elektromaschine angeordnet ist.

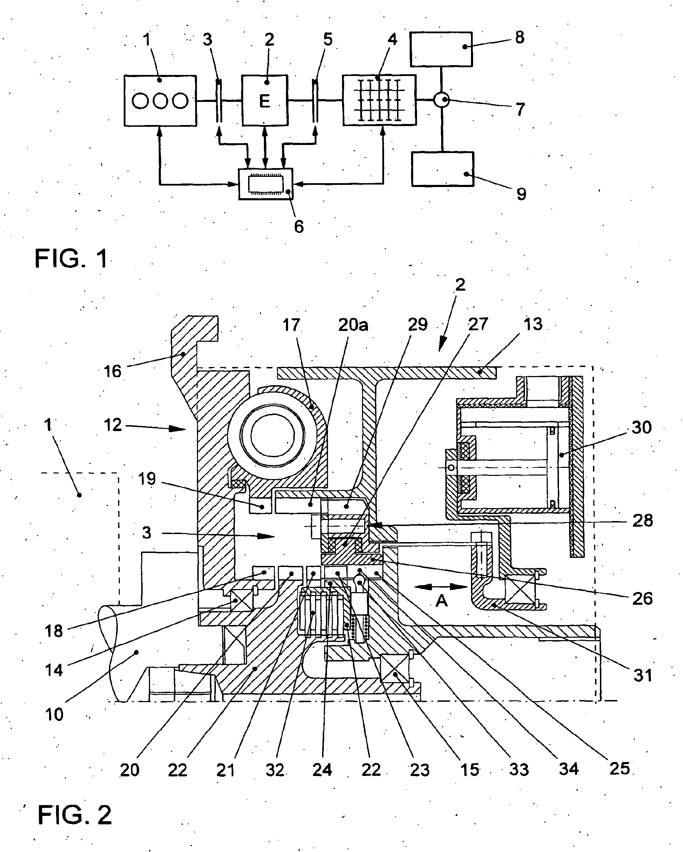

Wesentliche Bestandteile des in Figur 1 dargestellten Hybridantriebssystems sind ein Verbrennungsmotor 1 und eine Elektromaschine 2. Zwischen diesen angeordnet ist eine erste Kupplung 3, deren Aufbau und Funktion später noch im Zusammenhang mit der Figur 2 erläutert werden wird. Zwischen einem Getriebe 4 und der Elektromaschine 2 befindet sich eine hier konventionell ausgeführte Anfahr- und Trennkupplung 5, die ebenso wie alle anderen zuvor benannten Komponenten des Hybridantriebssystems mit einer Steuereinrichtung 6 verbunden sind. Diese erhält über hier nicht weiter dargestellte Sensoren Signale zu den Betriebszuständen der einzelnen Komponenten und kann ihrerseits auch auf Basis dieser Signale über Kennfeldsteuerungen oder -regelungen die Zustände des Verbrennungsmotors 1, der Elektromaschine 2, der Kupplungen 3 und 5 sowie des Getriebes 4 beeinflussen. Die von dem Verbrennungsmotor 1 und/oder der Elektromaschine 2 erzeugte Antriebsleistung wird schließlich vom Getriebe 4 auf ein Differential 7 übertragen und von dort auf Räder 8, 9 verteilt.

Für die Umsetzung der Erfindung von herausgehobener Bedeutung ist die Gestaltung der Kupplung 3 zwischen dem Verbrennungsmotor 1 und der Elektromaschine 2. Figur 2 zeigt hierzu schematisch angedeutet einen Kurbelwellenzapfen 10 des Verbrennungsmotors 1, der mit einem Lagerflansch 11 drehverbunden ist. Auf diesen sind sowohl ein Zweimassenschwungradsystem 12 als auch ein Rotor 13 der Elektromaschine 2 über Drehlager 14 bzw. 15 drehbar gelagert. Zum Zweimassenschwungradsystem 12 gehören eine Primärmasse 16 und eine Sekundärmasse 17, die jeweils einer Verzahnung 18 bzw. 19 zugeordnet ist. Die Verzahnung 18 ist fluchtend zu einer Verzahnung 20 des Lagerflansches 11, einer Verzahnung 21, einem Sperrring 22 und einer Verzahnung 23 am Rotor 13 angeordnet. In die Verzahnungen 18, 20, 21 und 23 kann eine Verzahnung 25 in Eingriff gebracht werden, die zu einer ersten Schiebemuffe 26 gehört. Über ein Axiallager 27 ist die erste Schiebemuffe 26 mit einer zweiten Schiebemuffe 28 verbunden, die ihrerseits auf ihrem Außenumfang eine Verzahnung 29 aufweist. Diese ist permanent mit der Verzahnung 20a des Rotors 13 in Eingriff und kann auch mit der Verzahnung 19 im Bedarfsfall in Eingriff gebracht werden. Für die Verlagerung der Schiebemuffen 26, 28 ist ein Aktuator 30 vorgesehen, der hier ortsfest an einem nicht weiter dargestellten Gehäuse befestigt ist und einen drehbar gelagerten Stellkörper 31 gemäß Doppelpfeil A hin- und herbewegen kann.

Der Sperrring 22 gehört zu einer Synchronisiereinrichtung, die hier als Lamellenkupplung 32 ausgeführt ist. Für in der Zeichnung dargestellte Ausgangslage ist die Lamellenkupplung 32 offen. Ein federvorgespannter Druckbolzen 33 ragt in eine Keilrille 34 der Schiebemuffe 26 hinein und legt diese somit axial fest.

Die in der Figur 2 dargestellte Position für die Schiebemuffen 26 und 28 ermöglicht den reinen Antrieb über die Elektromaschine 2. Der Rotor 13 ist vollständig von dem Lagerflansch 11 entkoppelt, weil die Lamellenkupplung 32 vollständig geöffnet ist. Damit gibt es keine drehmomentenübertragende Verbindung zwischen der Elektromaschine 2 und dem Verbrennungsmotor 1. Für die Umschaltung von dem reinen Elektromaschinen-Antrieb auf den verbrennungsmotorischen Antrieb ist zunächst der Verbrennungsmotor 1 zu starten. Dazu werden erfindungsgemäß die Schiebemuffen 26, 28 auf Veranlassung der Steuereinrichtung 6 der Aktuator 30 gemäß Doppelpfeil A nach links verschoben, so dass zum einen der Rotor 13 über die Verzahnungspaare 20a, 29 und 21, 25 (und damit immer noch auch mit der Verzahnung 23) mit dem Sperrring 22 verbunden wird. Gleichzeitig sorgt die Keilrille 34 in der Schiebemuffe 26 dafür, dass der Druckbolzen 33 einerseits nach unten bewegt wird und andererseits aber auch eine Axialkraft auf den Sperrring 22 ausübt, so dass mit zunehmender Schließkraft der Lamellenkupplung 32 immer mehr Drehmoment vom Rotor 13 auf den Lagerflansch 11 und damit auf die Kurbelwelle 10 übertragen wird. Sobald im Rahmen dieses Synchronisationsvorganges die Verzahnung 20 des Lagerflansches und die Verzahnungen in 21 und 23/25 die gleichen Drehzahlen aufweisen, wird über den Aktuator 30 das aus Schiebemuffe 26 und Schiebemuffe 28 bestehende Schiebemuffensystem weiter gemäß Doppelpfeil A nach links verschoben, so dass zwar eine feste mechanische Kupplung zwischen dem Rotor 13 und der Kurbelwelle 10 besteht, die aus der Primärmasse 16 und der Sekundärmasse 17 bestehende Dämpfungseinrichtung jedoch noch nicht eingekoppelt ist. Die Elektromaschine muss also nicht beim Anlassvorgang für den Verbrennungsmotor 1 gegen die trägen Massen 16 und 17 arbeiten, so dass innerhalb kürzester Zeit über die Kurbelwelle 10 der Verbrennungsmotor 1 hochgerissen werden kann. In diesem Zustand kann nun also sowohl Drehmoment von der Elektromaschine 2 auf den Verbrennungsmotor 1 übertragen werden als auch umgekehrt vom Verbrennungsmotor 1 auf die Elektromaschine 2, um diese beispielsweise generatorisch zu betrieben. Mit der Entkopplung des Zweimassenschwungradsystems 12 während des Anlassens der Antriebsmaschine 1 kann sowohl im Hinblick auf die Startgeschwindigkeit als auch auf die dabei entstehenden Abgasemissionen ein Optimum erreicht werden.

Nach Abschluss des eigentlichen Anlassvorganges ist für den rein verbrennungsmotorischen Antrieb des erfindungsgemäßen Hybridantriebsystems das Zweimassenschwungrad 12 mit seinen trägen Massen 16 und 17 jedoch an die Kurbelwelle 10 anzukoppeln, um die aus dem Verbrennungsbetrieb resultierende Ungleichförmigkeit der Drehbewegung der Kurbelwelle 10 dämpfen zu können. Zu diesem Zweck werden die Schiebemuffen 26, 28 weiter gemäß Doppelpfeil A nach links verschoben, so dass sich für die Ankopplung der Primärmasse 16 die Verzahnungen 18, 20 und 25 im Eingriff befinden und für die Ankopplung der Sekundärmasse 17 die Verzahnungen 29, 20a und 19. Für diesen Schaltzustand der Schiebemuffen 26, 28 stellt sich beim Verbrennungsmotor 1 ein Betrieb ein, wie er aus konventionellen Antrieben mit Zweimassenschwungrädern bereits bekannt ist. Die erfindungsgemäße Anordnung ist auch im Hinblick auf eine besonders große Laufruhe besonders günstig, weil bei Ankopplung der trägen Massen 16 und 17 die Verbindung zum Rotor 13 erhalten bleibt und dieser somit ebenfalls als dämpfende Trägheitsmasse den Drehungleichförmigkeiten des Verbrennungsmotors 1 entgegenwirkt.

Für das Abschalten des Verbrennungsmotors 1 sind die Schiebemuffen 26, 28 wieder gemäß Doppelpfeil A in die Figur 2 ersichtliche Ausgangssituation zurückzuverstellen, so dass zunächst das Zweimassenschwungradsystem 16 außer Eingriff gerät und dann eine Entkopplung vom Rotor 13 stattfindet.

Die Anordnung der Sekundärmasse 17 und des Aktuators 30 wird bei dem in der Zeichnung dargestellten Ausführungsbeispiel so gewählt, dass diese in den Rotor 13 hineinragen und so einen sehr kompakten Aufbau der gesamten Kupplungsanlage ermöglichen. Damit kann das erfindungsgemäße Hybridantriebssystem auch für Fahrzeuge genutzt werden, bei denen der Verbrennungsmotor 1 in Querbauweise angeordnet ist. Alternativ zu der Lamellenkupplung 32 kann auch ein Reibring-Konusring-System vorgesehen werden, wie es beispielsweise bei der Synchronisation von Getriebegängen in Stufenwechselgetrieben bekannt ist. Auch mit einer solchen Reibring-Konusring-Konfiguration sind kompakte Bauweisen realisierbar.

## Patentansprüche

1. Hybridantriebssystem für ein Fahrzeug mit
- einem Verbrennungsmotor (1), dem eine Dämpfungseinrichtung (12, 16, 17) zur Dämpfung von Drehungleichförmigkeiten zugeordnet ist,
- einer als Generator und Elektromotor betreibbaren Elektromaschine (2),
- einer ersten Kupplung (3) zwischen dem Verbrennungsmotor (1) und der Elektromaschine (2),
- mit einer zweiten Kupplung (5) zwischen der Elektromaschine (2) und einem Getriebe (4), und
- einer Steuereinrichtung (6), durch die das Zusammenwirken der vorgenannten . Komponenten beeinflussbar ist,
- wobei für das Umschalten von Elektromaschineantrieb auf Verbrennungsmotorantrieb zum Start des Verbrennungsmotors (1) die Dämpfungseinrichtung (12, 16, 17) von dem Verbrennungsmotor (1) entkoppelbar ist,
**dadurch gekennzeichnet, dass**
die erste Kupplung (3) als Formschlusskupplung durch ein Schiebemuffensystem (26, 28) ausgebildet ist und dieses sowohl der Kopplung/Entkopplung der Dämpfungseinrichtung (12,16,17) mit/von dem Verbrennungsmotor (1) als auch mit /von der Elektromaschine (2) dient.

2. Hybridantriebssystem nach Anspruch 1 , **dadurch gekennzeichnet, dass** der Formschlusskupplung eine Synchronisationseinrichtung (32) zugeordnet ist, durch die die Drehzahl der Elektromotormaschine (2) und des Verbrennungsmotors (1) angleichbar sind.

3. Hybridantriebssystem nach Anspruch 2, dass die Synchronisationseinrichtung durch eine Reibring-Konusring-Anordnung oder durch eine Lamellenkupplung (32) gebildet ist.

4. Hybridantriebssystem nach einem der Ansprüche 1 bis 3, **dadurch gekennzeichnet, dass** das Schiebemuffensystem
- eine erste Schiebemuffe (26) aufweist, die mit einem dem Verbrennungsmotor (1) zugeordneten Bauteil (11) in Eingriff bringbar ist,
- eine zweite Schiebemuffe (28) aufweist, die mit der ersten Schiebemuffe (26) verbunden ist und mit einem Rotorabschnitt (13) der Elektromaschine (2) in Eingriff bringbar ist.

5. Hybridantriebssystem nach einem der Ansprüche 1 bis 4, **dadurch gekennzeichnet, dass** die erste Schiebemuffe (26) bei elektromotorischem Antrieb mit einem Sperrring (22) der Lamellenkupplung (32) in Eingriffsverbindung steht.

6. Hybridantriebssystem nach wenigstens einem der Ansprüche 1 bis 5, **dadurch gekennzeichnet, dass** die Dämpfungseinrichtung ein Zweimassenschwungrad (12, 16, 17) ist.

7. Hybridantriebssystem nach einem der Ansprüche 1 bis 6, **dadurch gekennzeichnet, dass** durch das Schiebemuffensystem (26, 28) eine Primärmasse (16) und eine Sekundärmasse (17) des Zweimassenschwungradsystems (12) gemeinsam an das dem Verbrennungsmotor (1) zugeordnete Bauteil (11) ankoppelbar sind.

8. Hybridantriebssystem nach Anspruch 7 **dadurch gekennzeichnet, dass** die Sekundärmasse (17) des Zweimassenschwungradsystems (12) zumindest teilweise innerhalb des Rotors (13) der Elektromaschine (2) angeordnet ist.

9. Hybridantriebssystem nach einem der Ansprüche 1 bis 8, **dadurch gekennzeichnet, dass** ein Aktuator (30) zur Beaufschlagung des Schiebemuffensystems (26, 28) zumindest abschnittsweise innerhalb des Rotors (13) der Elektromaschine (2) angeordnet ist.

## Claims

1. Hybrid drive system for a vehicle having
- an internal combustion engine (1) which has an associated damping device (12, 16, 17) for damping rotational non-uniformities,
- an electrical machine (2) which can be operated as a generator and an electric motor,
- a first clutch (3) between the internal combustion engine (1) and the electrical machine (2),
- with a second clutch (5) between the electrical machine (2) and a transmission (4), and
- a control device (6) which can influence the interaction between the abovementioned components,
- it being possible to uncouple the damping device (12, 16, 17) from the internal combustion engine (1) for the purpose of switching over from drive by the electrical machine to drive by the internal combustion engine in order to start the internal combustion engine (1),
**characterized in that**
the first clutch (3) is formed as a positive clutch by a sliding sleeve system (26, 28) and this sliding sleeve system serves both to couple/uncouple the damping device (12, 16, 17) to/from the internal combustion engine (1) and to/from the electrical machine (2).

2. Hybrid drive system according to Claim 1, **characterized in that** the positive clutch has an associated synchronization device (32) which can be used to adapt the rotation speed of the electric motor machine (2) and of the internal combustion engine (1).

3. Hybrid drive system according to Claim 2, **characterized in that** the synchronization device is formed by a friction ring/conical ring arrangement or by a multiple-disc clutch (32).

4. Hybrid drive system according to one of Claims 1 to 3, **characterized in that** the sliding sleeve system
- has a first sliding sleeve (26) which can engage with a component (11) which is associated with the internal combustion engine (1),
- has a second sliding sleeve (28) which is connected to the first sliding sleeve (26) and can engage with a rotor section (13) of the electrical machine (2).

5. Hybrid drive system according to one of Claims 1 to 4, **characterized in that** the first sliding sleeve (26) forms an engaged connection with a locking ring (22) of the multiple-disc clutch (32) in the case electromotive driving.

6. Hybrid drive system according to at least one of Claims 1 to 5, **characterized in that** the damping device is a dual-mass flywheel (12, 16, 17).

7. Hybrid drive system according to one of Claims 1 to 6, **characterized in that** a primary mass (16) and a secondary mass (17) of the dual-mass flywheel system (12) can be jointly coupled to the component (11), which is associated with the internal combustion engine (1), by the sliding sleeve system (26, 28).

8. Hybrid drive system according to Claim 7, **characterized in that** the secondary mass (17) of the dual-mass flywheel system (12) is arranged at least partially within the rotor (13) of the electrical machine (2).

9. Hybrid drive system according to one of Claims 1 to 8, **characterized in that** at least a section of an actuator (30) for acting on the sliding sleeve system (26, 28) is arranged within the rotor (13) of the electrical machine (2).

## Revendications

1. Système d'entraînement hybride pour un véhicule automobile doté :
- d'un moteur à combustion interne (1) auquel est associé un dispositif d'amortissement (12, 16, 17) pour amortir les irrégularités de rotation ;
- d'une machine électrique (2) pouvant prendre la forme d'un générateur et d'un moteur électrique ;
- d'un premier embrayage (3) prévu entre le moteur à combustion interne (1) et la machine électrique (2) ;
- d'un deuxième embrayage (5) prévu entre la machine électrique (2) et une boîte de vitesses (4) ; et
- d'un dispositif de commande (6) permettant d'influer sur l'interaction des composants précédemment mentionnés ;
- le dispositif d'amortissement (12, 16, 17) étant découplé du moteur à combustion interne (1) pour passer de l'entraînement de machine électrique à l'entraînement de moteur à combustion interne lors du démarrage du moteur à combustion interne (1) ;
**caractérisé en ce que** :
le premier embrayage (3) prend la forme d'un embrayage à complémentarité de formes du fait d'un système de manchon coulissant (26, 28) et sert au Couplage/découplage du dispositif d'amortissement (12, 16, 17) par rapport au moteur à combustion interne (1) ainsi que par rapport à la machine électrique (2).

2. Système d'entraînement hybride selon la revendication 1, **caractérisé en ce qu'**un dispositif de synchronisation (32) est associé à l'embrayage à complémentarité de formes et sert à harmoniser la vitesse de rotation de la machine à moteur électrique (2) et du moteur à combustion interne (1).

3. Système d'entraînement hybride selon la revendication 2, **caractérisé en ce que** le dispositif de synchronisation est constitué par un agencement bague de frottement-bague conique ou par un embrayage à lamelles (32).

4. Système d'entraînement hybride selon l'une quelconque des revendications 1 à 3, **caractérisé en ce que** le système de manchon coulissant comprend :
un premier manchon coulissant (26) pouvant être mis en prise avec un composant (11) associé au moteur à combustion interne (1) ;
un deuxième manchon coulissant (28) relié au premier manchon coulissant (26) et pouvant être mis en prise avec une section de rotor (13) de la machine électrique (2) .

5. Système d'entraînement hybride selon l'une quelconque des revendications 1 à 4, **caractérisé en ce que** le premier manchon coulissant (26) est relié en mise en prise avec une bague de fermeture (22) de l'embrayage à lamelles (32) en présence d'un entraînement électromotorisé.

6. Système d'entraînement hybride selon au moins l'une quelconque des revendications 1 à 5, **caractérisé en ce que** le dispositif d'amortissement est un volant à deux masses (12, 16, 17).

7. Système d'entraînement hybride selon l'une quelconque des revendications 1 à 6, **caractérisé en ce qu'**une masse principale (16) et une masse secondaire (17) du système de volant à à deux masses (12) sont couplées ensemble au composant (11) associé au moteur à combustion interne (1) grâce au système de manchon coulissant (26, 28).

8. Système d'entraînement hybride selon la revendication 7, **caractérisé en ce que** la masse secondaire (17) du système de volant à deux masses (12) est disposée au moins en partie à l'intérieur du rotor (13) de la machine électrique (2).

9. Système d'entraînement hybride selon l'une quelconque des revendications 1 à 8, **caractérisé en ce qu'**un actionneur (30) est disposé à l'intérieur du rotor (13) de la machine électrique (2) pour charger le système de manchon coulissant (26, 28) au moins de façon partielle.
